# EUROPÄISCHE PATENTSCHRIFT

(11) **EP 0 711 401 B1**
(45) Veröffentlichungstag und Bekanntmachung des Hinweises auf die Patenterteilung: **11.08.1999**
(21) Anmeldenummer: 95919923.3
(22) Anmeldetag: 30.05.1995
(51) Int. Cl.: F42C 7/02

(54) **SCHLAGVORRICHTUNG ZUM AUSLÖSEN EINER ZÜNDUNG**
PERCUSSION MECHANISM FOR TRIGGERING AN IGNITION
DISPOSITIF DE PERCUSSION SERVANT AU DECLENCHEMENT D'UN ALLUMAGE

(30) Priorität: 30.05.1994 AT 111194
(43) Veröffentlichungstag der Anmeldung: 15.05.1996
(73) Patentinhaber: Dynamit Nobel Graz Gesellschaft m.b. H., 8020 Graz (AT)
(72) Erfinder: ANETSHOFER, Wilfried, A-8430 Leibnitz (AT)
(74) Vertreter: Patentanwälte BARGER, PISO & PARTNER
(86) Internationale Anmeldenummer: AT9500112
(87) Internationale Veröffentlichungsnummer: WO9533177

(56) Entgegenhaltungen:
- EP-A- 0 229 009
- CH-A- 202 890
- DE-A- 2 332 347
- FR-A- 865 240
- FR-A- 1 058 849
- GB-A- 1 605 358

## Beschreibung

Die Erfindung betrifft eine Schlagvorrichtung zum Auslösen einer Zündung einer pyrotechnischen Vorrichtung gemäß dem Oberbegriff des Anspruches 1.

Eine derartige Schlagvorrichtung ist aus der FR-A 865 240 bekannt. Dabei sitzt eine Kugel in der Umfangsnut eines Schiebers und das umgebende Gehäuse weist zwei Taschen auf, eine oberhalb und eine unterhalb der Umfangsnut. Weiters ist ein Auslöser vorgesehen, an dem eine in Ruhelage gespannte Schlagbolzenfeder angreift und an dem auch eine Auslöserfeder angreift. Beim Eindrücken des Auslösers gegen die Auslöserfeder gelangt die Kugel in die eine der beiden Taschen, beim Anziehen an einer Zugschnur, die am Schieber angreift, in die andere der beiden Taschen, wodurch jeweils der Schlabolzen freigeben wird. Diese vorbekannte Schlagvorrichtung ist wegen der großen Auslösewege und der großen Auslösekräfte zur Verwendung mit Stolperdrähten u.dgl. nicht geeignet.

Eine ähnliche Vorrichtung ist aus der CH-A 202 890 bekannt. Dabei ragt der Schieber aus dem Gehäuse und ist als Auslöser ausgebildet, der beim Überfahren durch ein Fahrzeug zuerst die an ihm angreifende Schlagbolzenfeder spannt und sodann den Schlagbolzen freigibt. Auch diese vorbekannte Vorrichtung ist wegen des großen Auslöseweges und der großen Auslösekraft zur Verwendung mit anderen pyrotechnischen Ladungen als fahrzeugbekämpfenden Ladungen, so insbesondere für Ladungen, die durch Stolperdrähte oder Zugschnüre ausgelöst werden sollen, unbrauchbar.

Prinzipiell werden Schlagvorrichtungen insbesonders zum Auslösen der Zündung einer Mine durch Stolperdrähte oder durch mechanische Fernauslösung mittels Zugschnur verwendet. Dazu wird die Schlagvorrichtung im Gelände, beispielsweise an einem Baum, fixiert und über eine die Zündung weiterleitende Vorrichtung mit der Mine verbunden. Die Schlagvorrichtung weist einen beweglichen Teil auf, der, wenn er aus der Ruhelage gebracht wird, einen Schlagbolzen freigibt, der unter der Wirkung einer Feder steht und bei seiner Freigabe die Zündung auslöst.

An derartige Vorrichtungen werden die verschiedensten, zum Teil kontradiktorischen, Anforderungen gestellt: Bei Auslösung durch einen Stolperdraht soll die zur Auslösung reichende Zugkraft am Stolperdraht extrem niedrig, bevorzugt im Bereich von nur 3 N, liegen.

Bei Auslösung durch eine Zugschnur muß die Auslösekraft wesentlich höher, bevorzugt im Bereich von 100 N liegen, um ein unbeabsichtigtes Zünden zuverlässig zu vermeiden.

Ein bis jetzt unerreichtes Ziel ist es, die Schlagvorrichtung zu schärfen, ohne sich dabei in ihrer unmittelbaren Nähe zu befinden, wobei die Schlagvorrichtung, um ein Entschärfen durch den Gegner zu erschweren, meist im Streubereich der Mine liegt. Es besteht daher beim Schärfen der Vorrichtung immer die Gefahr, versehentlich die Mine zu zünden und so selbst zu Schaden zu kommen.

Die Erfindung hat das Ziel, eine mechanische Schlagvorrichtung zu schaffen, die alle diese Anforderungen erfüllt und dabei robust in ihrem Aufbau und kostengünstig in ihrer Herstellung ist.

Erfindungsgemäß werden diese Ziele bei einer Schlagvorrichtung der eingangs definierten Art durch die Maßnahmen des kennzeichnenden Teiles des Anspruches 1 erreicht.

Durch diese Maßnahme wird erreicht, daß bei entsprechender relativer Dimensionierung der Nut, der Durchbrechung, der Sperrelement und der Tasche eine vorbestimmte axiale Verschiebung des Schiebers ausreicht, um das Sperrelement radial nach innen in den Bereich der Nut gleiten zu lassen, wodurch die bis dahin bestehende, durch das Sperrelement geschaffene, formschlüssige Verriegelung zwischen Gehäuse und Schlagbolzen gelöst wird, und der Schlagbolzen unter der Wirkung der auf ihm lastenden Feder zur Zündladung hin getrieben wird.

Die Unteransprüche betreffen vorteilhafte Ausgestaltungen, insbesondere eine Vorrichtung, durch die das Schärfen der Schlagvorrichtung das tatsächliche Scharfwerden erst nach einem vorbestimmten Zeitintervall bewirkt, um die Gefahr des versehentlichen Auslösens während oder unmittelbar nach dem Schärfen zu beseitigen. Dazu ist erfindungsgemäß vorgesehen, daß ein Sperrstift in die Bahn des Schlagbolzens ragt, daß der Sperrstift unter der Wirkung einer Aktivatorfeder steht, die bestrebt ist, ihn aus der Schlagbolzenbahn zu bewegen und daß der Sperrstift nach Aktivieren der Vorrichtung durch eine mechanische oder hydraulische Zeitverzögerungsvorrichtung über ein vorbestimmtes Zeitintervall in der Bahn des Schlagbolzens gehalten wird.

Die Erfindung wird an Hand der beiliegenden Zeichnung unter Bezugnahme auf ein bevorzugtes Ausführungsbeispiel näher erläutert. Dabei zeigt die
Fig. 1 eine bereits fertig montierte, gesicherte erfindungsgemäße Vorrichtung, die an einem Baum befestigt ist,
Fig. 2 zeigt die erfindungsgemäße Vorrichtung im Schnitt,
Fig. 3 zeigt den eigentlichen Mechanismus der erfindungsgemäßen Schlagvorrichtung im Schnitt analog zur Fig. 2 und
Fig. 4 zeigt eine mit der erfindungsgemäßen Schlagvorrichtung bevorzugt zu verwendende Zeitverzögerungsvorrichtung.

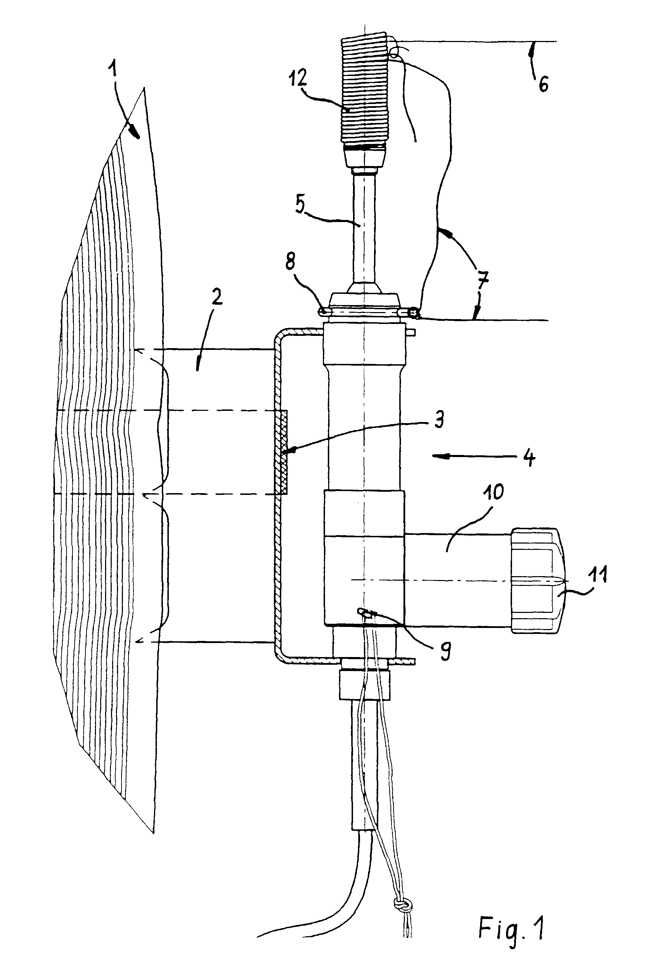

Fig. 1 zeigt eine erfindungsgemäße Vorrichtung nach ihrer Befestigung auf einem Baum 1, mittels einer Baumhalterung 2 und eines Zurrgurtes 3.

Die erfindungsgemäße Schlagvorrichtung, die in ihrer Gesamtheit mit 4 bezeichnet ist, trägt an ihrem oberen Ende einen Hebel 5, der gegenüber dem Gehäuse der Schlagvorrichtung 4 auf weiter unten erläuterte Weise verschwenkbar ist.

Am Hebel 5 werden ein oder mehrere Stolperdrähte 6 und/oder eine oder mehrere Zugschnüre 7 auf weiter unten erläuterte Weise befestigt.

Da die erfindungsgemäße Schlagvorrichtung bereits bei einem Zug von nur 3 N an einem der Stolperdrähte 6 zünden soll, ist der Hebel 5 so gelagert und der Mechanismus der Schlagvorrichtung 4 so ausgelegt, daß bei einem derartig geringen Zug am Stolperdraht 6 die Zündung erfolgt.

Da andererseits bei einem Betätigen der Zugschnur erst bei einem Zug von etwa 100 N an der Zugschnur 7 eine Zündung erfolgen soll, ist folgende Maßnahme getroffen: Die Zugschnur 7 läuft von der Stelle, an der der Bediener seine Position hat, nicht direkt zum Hebel 5, sondern zu einer Art Seegerring, der in einer Umfangsnut des Gehäuses der Schlagvorrichtung 4 sitzt und eine Öse für die Aufnahme der Zugschnur 7 aufweist, die im wesentlichen seiner offenen Stelle diametral gegenüberliegt. Von der Öse führt die Zugschnur 7 ungespannt und damit lose zum Hebel 5.

Die Funktionsweise dieser Vorrichtung ist folgende: Wenn an der Zugschnur 7 eine Zugkraft aufgebracht wird, die ausreicht, um den Seegerring durch elastische Deformation vom Gehäuse der Schlagvorrichtung abzuziehen, so springt der Seegerring 8 ab und der Zug wirkt nunmehr direkt auf den Hebel 5, der unweigerlich verschwenkt wird, wodurch die Zündung erfolgt.

In Fig. 1 ist auch ein Sicherungssplint 9 dargestellt, der sich zwischen dem Schlagbolzen und dem Zündsatz befindet und nach dessen Entfernung die Schlagvorrichtung scharf ist.

Eine besondere Ausgestaltung der Erfindung, die in Fig. 1 dargestellt ist, sieht einen Zeitverzögerer 10 vor, der beim Schärfen der Vorrichtung nach dem Anbringen aller Stolperdrähte und Zugschnüre durch Entfernen seiner Kappe 11, beispielsweise durch Abschrauben, aktiviert wird. Es ist selbverständlich möglich, statt einer Kappe einen Splint oder Bolzen vorzusehen, der zum Aktivieren des Zeitverzögerers entfernt oder auch nur verschoben wird. Dieser Zeitverzögerer kann selbstverständlcih auch bei anderen Schlag- oder Zündvorrichtungen verwendet werden, soferne nur sein Sperrstift in die Bahn eines Schlagbolzens o.dergl. gebracht werden kann.

Der Zeitverzögerer ist ein Sicherheitselement, ähnlich dem Sicherungssplint 9, das aber die Mine erst nach einem vorbestimmten Zeitintervall schärft, so daß das Bedienungspersonal Zeit hat, das gefährdete Terrain um die Schlagvorrichtung herum zu verlassen, bevor die Schlagvorrichtung tatsächlich in der Lage ist, die Mine od. dgl. zu zünden.

Eine weitere Besonderheit der erfindungsgemäßen Vorrichtung ist der Fig. 1 noch zu entnehmen, sie betrifft die Befestigung der Stolperdrähte bzw. Zugschnüre am Hebel 5. Um die Montage zu vereinfachen, ist der Hebel 5 über einen vorgegebenen axialen Bereich mit einer Schraubfeder 12 umwickelt, die in ihrem der Schlagvorrichtung 4 abgewandten Endbereich über den eigentlichen Hebel 5 hinausragt.

Zur Montage eines Stolperdrahtes oder einer Zugschnur ist es nur notwendig, dieses fadenförmige Element zwischen zwei benachbarten, aneinander anliegenden Windungen durchzuziehen, wodurch es zuverlässig festgeklemmt wird, wie dies in Fig. 1 schematisch angedeutet ist.

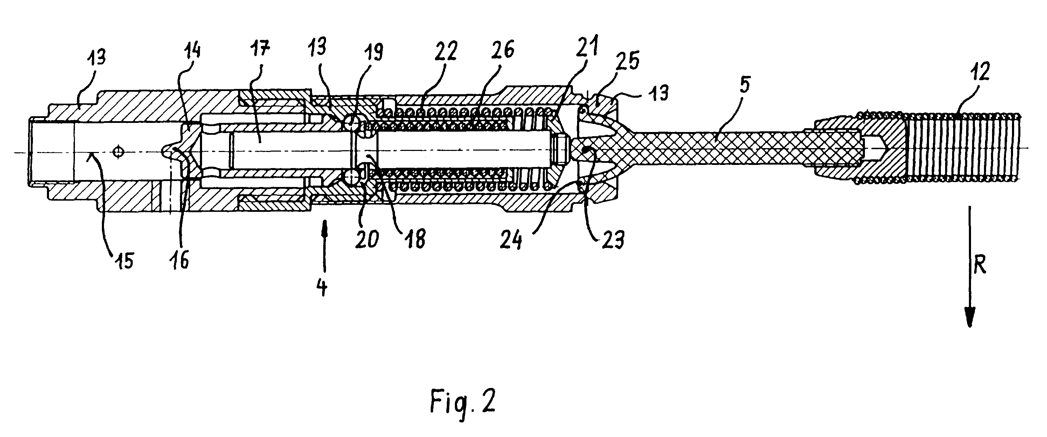

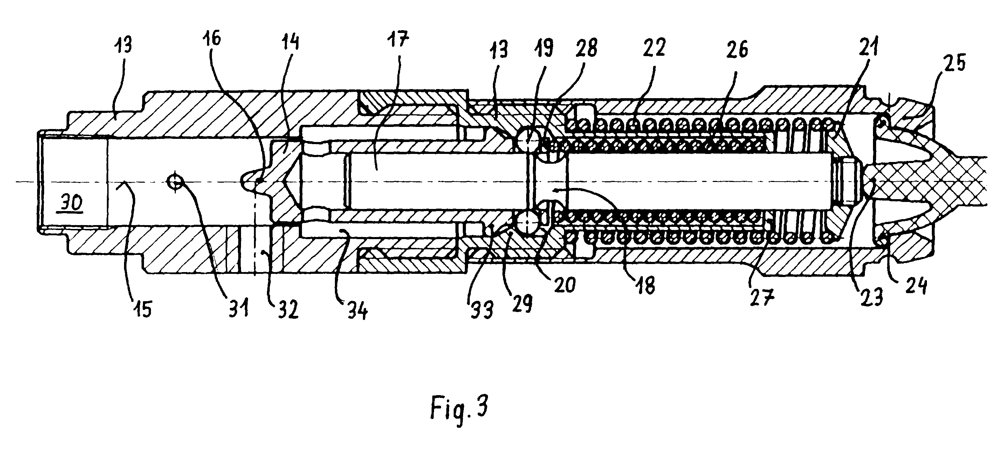

Der innere Aufbau der eigentlichen Schlagvorrichtung 4 ist aus den Fig. 2 und 3, die jeweils einen Axialschnitt in Ruhelage darstellen, ersichtlich.

Die Schlagvorrichtung 4 besteht aus einem mehrteiligen, im wesentlichen zylindrischen Gehäuse 13 mit einer Hauptachse 15. Im Inneren des Gehäuses 13 ist ein Schlagbolzen 14 entlang der Hauptachse 15 verschieblich angeordnet. Der Schlagbolzen 14 weist an seinem dem Hebel 5 abgewandten Ende eine Schlagbolzenspitze 16 auf und ist zumindest in seinem der Schlagbolzenspitze 16 abgewandten Endbereich als Hohlzylinder ausgebildet.

Im Inneren des hohlen Schlagbolzens 14 ist ein Schieber 17 angeordnet, der ebenfalls axial verschieblich ausgebildet ist. Dieser Schieber 17 weist eine ringförmige Einschnürung oder Nut 18 auf. In der Ruhelage der Vorrichtung befinden sich in dem axialen Bereich des Schlagbolzens 14, der der Nut 18 des Schiebers 17 unmittelbar benachbart ist, zwei Durchbrechungen, in denen jeweils eine Kugel 19 ruht. Die Stärke der Wand des Schlagbolzens und der Durchmesser der Kugeln ist so abgestimmt, daß die Kugeln radial nach außen ragen, was möglich ist, weil das Gehäuse 13 in diesem Bereich Taschen 20 in seiner Innenwand aufweist, in die die Kugeln ragen.

Der Schieber 17 ist an seinem der Schlagbolzenspitze 16 abgekehrten Ende mit einem Federteller 21 verbunden. An diesem Federteller greift eine Schieberfeder 22 an, die im gezeigten Beispiel eine Schraubfeder ist und den Schieber zum Hebel 5 drängt.

An der hebelseitigen Stirnfläche des Schiebers 17 oder am Federteller 21, aber der Schieberfeder 22 gegenüber liegt auch ein Zentraldorn 23 des Hebels 5 an und verhindert formschlüssig jede weitere Bewegung des Schiebers 17 unter der Wirkung der Schieberfeder 22 von der Schlagbolzenspitze weg.

Der Hebel 5 weist an seinem der Vorrichtung 4 zugewandten Ende nicht nur den Zentraldorn 23 auf, sondern auch eine becher- oder kappenförmige Ausbildung, genannt Glocke 24, die mit ihrem Scheitel vom Schieber 17 weg gerichtet ist und an ihrem freien Ende einen radial nach außen ragenden Wulst aufweist. Dieser Wulst liegt, axial gesehen, schlagbolzenseitig von einem Innenbund 25 des Gehäuses 13.

Unter der Wirkung der Schieberfeder 22 wird der Zentraldorn 23 aus dem Gehäuse 13 gedrückt, bis der Wulst der Glocke 24 bündig am Innenbund 25 des Gehäuses 13 anliegt, wobei durch die Rotationssymmetrie der Glocke und des Innenbundes der Hebel 5 in die dargestellte, mit der Hauptachse 15 fluchtenden, Lage kommt.

Wird nun durch einen der Stolperdrähte 6 oder die Zugschnur 7 eine Kraft auf den Hebel 5 wirksam, die eine radiale Komponente R, die schematisch in Fig. 2 eingezeichnet ist, aufweist, so verschwenkt sie den Hebel 5 um den Punkt am Umfang bzw. Wulst der Glocke 24, der der Richtung der Radialkomponente R diametral zur Hauptachse 15 gegenüberliegt.

Durch dieses Schwenken dringt der Zentraldorn 23 gegen die Kraft der Schieberfeder 22 tiefer ins Innere der Schlagvorrichtung 4 ein und verschiebt so den Schieber 17 in Richtung zur Schlagbolzenspitze 16.

Die Details innerhalb des Gehäuses 13 sind in Fig. 3 vergrößert, analog zur Fig. 2 dargestellt, das weitere Funktionieren der Vorrichtung wird an Hand dieser Figur erläutert. Wie bereits ausgeführt, dringt beim Verschwenken des Hebels 5 der Zentraldorn 23, verdreht um einen der Umfangspunkte der Glocke 24, tiefer in das Gehäuse 13 ein und verschiebt dabei den Schieber 17 gegen die Kraft der Schieberfeder 22 in Richtung zur Schlagbolzenspitze 16.

Dabei gelangt die Nut 18 in den Bereich der Kugeln 19 und gestattet eine radiale Bewegung der Kugeln 19 in Richtung zur Zentralachse 15.

Diese Bewegung wird nicht nur durch eine entsprechende Abschrägung der Enden der Taschen 20 erreicht, sondern auch dadurch, daß der Schlagbolzen 14 unter der Wirkung einer Schlagbolzenfeder 26 steht, die sich einerseits an einem Flansch 27, der fest mit dem Gehäuse 13 verbunden ist und andererseits an der der Schlagbolzenspitze abgewandten Stirnwand 28 des Schlagbolzens 17 abstützt.

In dem Augenblick, in dem die Kugeln 19 radial so weit nach innen gewandert sind, daß sie die Einschnürung 29 des Gehäuses 13 in axialer Richtung passieren können, wird der Schlagbolzen 17 durch die Schlagbolzenfeder 26 in Richtung der Schlagbolzenspitze 16 beschleunigt, bis er auf die nicht dargestellte Zündladung im Bereich der Aufnahme 30 der Schlagvorrichtung 4 aufschlägt und die Zündung vollbringt.

Von dieser Zündstelle an wird die Zündung durch bekannte Mittel, beispielsweise ein sogenanntes "Shock-Tube-System" zur Mine oder der jeweils zu zündenden pyrotechnischen Vorrichtung weitergeleitet.

Der oben geschilderte Ablauf findet nur statt, wenn die Schlagvorrichtung geschärft ist, d.h., daß sich kein Sicherungssplint 9 in der dafür vorgesehenen Sicherungsbohrung 31 befindet und daß ein eventuell in das Gewinde 32 eingesetzter Zeitverzögerer 10 ebenfalls die "Scharfstellung" erreicht hat.

Die erfindungsgemäße Vorrichtung, in der in der Zeichnung dargestellten bevorzugten Ausführungsform weist weitere Besonderheiten auf, die ihre Zuverlässigkeit und Sicherheit betreffen:
So verfügt der Schlagbolzen 14 über mindestens einen radialen Vorsprung 33. Jeder der vorhandenen Vorsprünge 33 wirkt mit einer Ausnehmung oder einem Abschnitt der Gehäuseinnenwand mit einem generell größeren Radius 34 so zusammen, daß eine Bewegung des Schlagbolzens 17 in Zündrichtung nur soweit erlaubt wird, daß die Zündung zuverlässig erfolgen kann, daß aber ein Austritt des gesamten Schlagbolzens aus dem Gehäuse 13 unmöglich wird.
Dadurch ist sichergestellt, daß während des Hantierens, des Zusammenbaus bzw. des Aktivierens der erfindungsgemaßen Vorrichtung der Schlagbolzen nicht verloren geht. Aus Sicherheitsgründen wird die axiale Beweglichkeit des Schlagbolzens 14 in Richtung der Hauptachse 15 durch den Vorsprung 33 und das axiale Ende der Ausnehmung 34 bevorzugt so begrenzt, daß die Schlagbolzenspitze 16 nicht über die äußerste Stirnfläche des Gehäuses 13 vorragen kann, was bedeutet, daß die Primärzündung im Bereich der Aufnahme 30 erfolgt. Durch diese Maßnahme wird jede Verletzungsgefahr durch den Schlagbolzen ausgeschaltet.

Ermöglicht werden die diversen Bewegungsbegrenzungen des Hebels 5 und des Schlagbolzens 17 durch die Tatsache, daß das Gehäuse 13 mehrteilig aufgebaut ist, so daß zuerst der Schlagbolzen in die in Fig. 3 linke Gehäusepartie eingesetzt wird, sodann der Gehäuseteil, der auch den Flansch 27 trägt, samt der Schlagbolzenfeder 26 und den Kugeln 19 aufgesetzt und verschraubt wird und schließlich der hebelseitige Gehäuseteil mit bereits eingelegtem Hebel 5 nach der Montage der Schieberfeder 22 und des Federtellers 21 montiert wird.

Üblicherweise liegt die erfindungsgemäße Vorrichtung bei der Montage am Einsatzort in der in Fig. 2 gezeigten Konfiguration vor. Zufolge der geringen zur Auslösung notwendigen Kraft in radialer Richtung ist es wünschenswert, eine Möglichkeit vorzusehen, bei versehentlichem Auslösen vor Montage einer Zündkapsel im Bereich der Aufnahme 30 den Schlagbolzen wieder spannen zu können.

Dies ist bei der gezeigten Ausführungsform tatsächlich möglich, wenn auf den Hebel 5 in axialer Richtung eine Kraft zum Gehäuse hin ausgeübt wird und sodann durch einen stab- oder rohrförmigen Gegenstand, der in die Aufnahme 30 axial eingeführt wird, der Schlagbolzen 14 bis zum endgültigen Anschlag zurückgeschoben wird, worauf zuerst die Kraft auf den Hebel 5 und sodann die Kraft auf den Schlagbolzen entfernt wird. Durch dieses Vorgehen wird es den Kugeln 19 beim Zurückdrängen des Schlagbolzens ermöglicht, an der Einschnürung 29 vorbei zu gelangen, indem sie in die in richtiger Lage befindliche Nut 18 eindringen. Es ist nur vom Moment des radialen Bewegens der Kugel 19 nach innen an die Kraft auf den Hebel 5 so zu reduzieren, daß er sich mit dem Schlagbolzen 14 und dem Schieber 17 gemeinsam in die in Fig. 2 bzw. Fig. 3 gezeigte Lage bewegen kann.

Eine wesentliche Ausgestaltung der Erfindung betrifft den oben erwähnten Zeitverzögerer 10, durch den es dem Bedienungspersonal möglich wird, die erfindungsgemäße Schlagvorrichtung zeitversetzt zu schärfen, so daß ein Verlassen des gefährdeten Gebietes nach erfolgtem Schärfvorgang aber vor tatsächlicher Schärfung der Schlagvorrichtung zu ermöglichen.

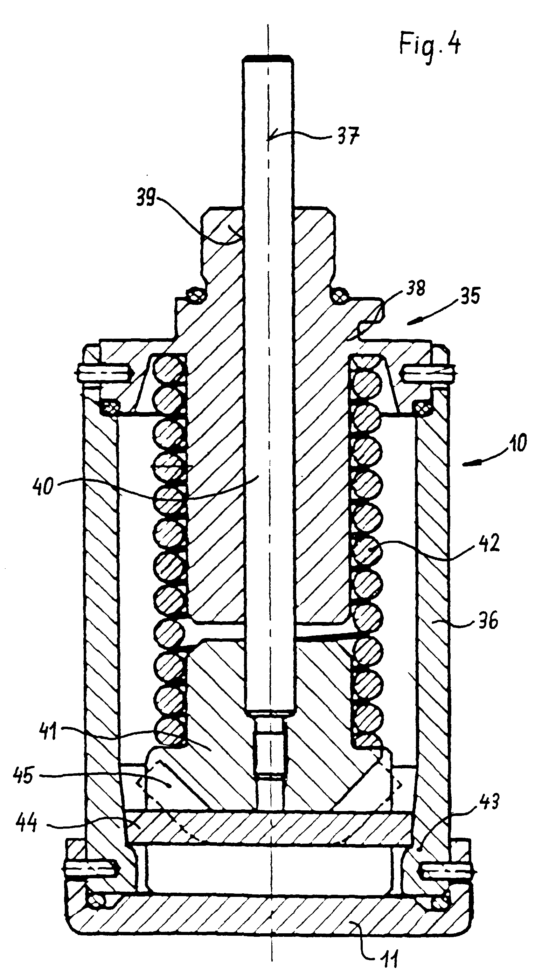

Ein derartiger erfindungsgemäßer Zeitverzögerer ist in einer bevorzugten Variante in Fig. 4 dargestellt.

Der erfindungsgemäß bevorzugte Zeitverzögerer 10 ist in der in Fig. 4 gezeigten Variante mit einer Bajonettbefestigung 35 zur Montage am Gehäuse 13 versehen und nicht mit einem Gewinde 32. Ansonsten ist er zur Verwendung mit der in Fig. 2 und 3 dargestellten Schlagvorrichtung gemäß Fig. 1 geeignet.

Der Zeitverzögerer 10 besteht aus einem Gehäuse 36, das im wesentlichen zylindrisch aufgebaut ist und, wie der gesamte Zeitverzögerer, eine Achse 37 aufweist, die im montierten Zustand die Hauptachse 15 der Schlagvorrichtung, bevorzugt lotrecht, schneidet.

Die Bajonettbefestigung 35 wird von einem Teil 38 des Gehäuses getragen, das im gezeigten Ausführungsbeispiel als eigener Teil ausgebildet ist und auch eine Führung 39 für den entlang der Achse 37 beweglichen Sperrstift 40 trägt. Die im montierten Zustand nach außen gerichtete Stirnwand des Gehäuses besteht aus einer Kappe 11, die zur Aktivierung der Schlagvorrichtung abgenommen wird. In der gezeichneten Aufbewahrungs- und Sicherungslage des Zeitverzögerers 10 stützt sich ein Federteller 41, der mit dem Sperrstift 40 fest verbunden ist und unter der Kraft einer Aktivatorfeder 42 steht, an der Kappe 11 ab.

Wie oben erläutert, kann statt der Kappe 11 ein Stift oder Bolzen vorgesehen sein, an dem sich der Federteller 41 bzw. der Sperrstift 40 abstützt. Im Bereich der Kappe 11 weist die Innenwandung des Gehäuses 36 eine Durchmesserverkleinerung und einen Absatz 43 auf. An diesem Absatz liegt ein plastisch deformierbarer Querbolzen 44 an, der durch eine radiale Ausnehmung 45 des Federtellers 41 gesteckt ist. Im Umfangsbereich, d.h. mit zunehmendem Abstand von der Achse 37, weist die radiale Ausnehmung 45 eine zunehmende Erstreckung bzw. Höhe in axialer Richtung, gerichtet zur Aktivatorfeder 42 hin, auf.

Die Wirkungsweise dieser Vorrichtung ist folgende:
Beim Aktivieren der Schlagvorrichtung, nachdem alle Stolperdrähte und Zugschnüre am Hebel 5 befestigt sind, wird zuerst der Sicherungssplint 9 aus der Sicherungsbohrung 41 entfernt. Bei montiertem Zeitverzögerer 10 ragt aber nach wie vor der Sperrstift 40 in den Weg des Schlagbolzens 14, so daß auch bei einer Verschwenkung des Hebels 5 keine Zündung erfolgen kann. Da darüberhinaus der Sperrstift 40 den Schlagbolzen 14 in seiner in Fig. 3 gezeichneten Lage mit geringem Spiel festhält, wird der "Pseudoaktivierungszustand" bei einem unbeabsichtigten Verschwenken des Hebels 5 nach dessen Rückkehr in die gezeigte Ruhelage vollständig aufgehoben, da die Kugeln 19 zwar in die Ringnut 18 eindringen, aber noch nicht an der Einschnürung 29 vorbei gelangen konnten.
Durch passende Abstimmung der Schieberfeder 22 und der Schlagbolzenfeder 26 kehrt auch der Schlagbolzen, der um sein Spiel vorgerückt war, wieder in seine Ausgangslage zurück. Das Spiel ist notwendig um zu verhindern, daß der Schlagbolzen am Sperrstift anliegt und ihn durch Reibung fixiert, was die Schlagvorrichtung unbrauchbar machte.

Es wird nunmehr (nach dem Entfernen des Sicherungssplintes) die Kappe 11 vom Gehäuse 36 abgenommen, wodurch die Feder 42 über den Federteller 41 auf den plastisch deformierbaren Querbolzen 44, der beispielsweise aus Blei gefertigt ist, wirkt. Auf Grund der aufgebrachten Dauerlast deformiert sich das duktile Material dieses Querbolzens während einer vorgegebenen Zeit in die in Fig. 4 strichliert eingezeichnete Lage, wobei sich aber gleichzeitig mit dieser Deformation der Federteller 41 und damit der Sperrstift 40 entlang der Achse 37 von der Hauptachse 15 wegbewegt, bis schließlich die Umbiegung des Querbolzens 44 so groß ist, daß er durch den Absatz 43 hindurch gelangen kann.

Dadurch gelangt der Sperrstift 40 endgültig aus dem Bereich des Weges des Schlagbolzens 14. Je nach der Reibung der Aktivatorfeder 42 am Führungsteil 38 und am Federteller 41 wird der Federteller samt Sperrstift aus dem Gehäuse weggeschleudert oder bleibt aus ihm herausragend stehen. In beiden Fällen ist auch auf Entfernung festzustellen (beispielsweise durch Beobachtung mit einem Fernglas), ob der Zeitverzögerer die Schlagvorrichtung endgültig aktiviert hat.

Die Erfindung ist nicht auf das dargestellte Ausführungsbeispiel beschränkt, sondern kann verschiedentlich abgewandelt werden. So ist es möglich, das Gehäuse 13 und den aus drei Teilen erfolgenden Aufbau anders zu gestalten und die Schieberfeder und die Schlagbolzenfeder anders anzuordnen. Die Ausgestaltung des Schlagbolzens und seine Führung mit und entlang des Schiebers können anders als gezeichnet und beschrieben erfolgen und der Sicherungssplint und der Sperrstift können anders angeordnet sein.

Beim Zeitverzögerer ist es möglich, verschiedene Materialien aus Kunststoff oder duktilem Metall oder Legierungen zu verwenden, statt eines Querbolzens kann eine Scheibe verwendet werden, die an der Stirnfläche des Federtellers anliegt, wobei eine Kappe vorzusehen ist, die zumindest im Bereich der Achse 37 soweit axial vorspringt, daß sie die Scheibe entlastet.

Es ist selbstverständlich auch möglich, statt der mechanischen (duktilen) Zeitverzögerer hydraulische Zeitverzögerer zu verwenden, wie sie von verschiedenen Anwendungsgebieten her bekannt sind und in Kenntnis der Erfindung vom Fachmann auf dem Gebiete der Hydraulik oder der Waffentechnik leicht für den vorgesehenen Zweck adaptiert werden können. Derartige Zeitverzögerer haben den Vorteil, daß sie beispielsweise durch federbelastete Rückschlagventile auch nach ihrer Aktivierung wieder in die Sperrstellung gebracht werden können, ohne daß Teile ausgetauscht oder ersetzt werden müssen.

Es ist auch, wie weiter oben erwähnt, möglich, mit einem Uhrwerk betriebene Zeitverzögerer zu verwenden.

Die verwendeten Materialien sind für den Fachmann in Kenntnis der Erfindung und der Anwendungsgebiete leicht zu wählen, üblicherweise werden extrem lagerfähige und korrosionsfeste Materialien bevorzugt, da die erfindungsgemäße Vorrichtung bei den unterschiedlichsten Einsatzbedingungen über lange Zeiträume funktionsfähig bleiben muß. Es sei nur am Rande erwähnt, daß die Betriebs- und Lagertemperaturen zwischen -40 bis +60°C liegen können und daß eine Korrosionsresistenz nicht nur gegen Wasser, sondern auch gegen Salz, Schmutzwasser, Öl, Benzin u.ähnl. gegeben sein muß.

Es können an der erfindungsgemäßen Vorrichtungen die dargestellten Schraub- bzw. Bajonettverbindungen mit oder ohne entsprechende Dichtungen alternativ vorgesehen werden und es können diese Verbindungen durch Schnappverbindungen und bei besonderen Anwendungsfällen durch Klebeverbindungen erstzt werden.

Die verwendeten Federn brauchen nicht die dargestellte Form zu haben und können insbesonders auch aus nichtmetallischem Werkstoff bestehen.

Die allgemeine Form sowohl der Schlagvorrichtung als auch des Zeitverzögerers können vom Kreiszylinder und auch vom Zylinder abweichen, wenn dies wünschenswert erscheint.

Schließlich ist es nicht notwendig zwei Sperrelemnete, beispielsweise die Kugeln 19 vorzusehen, es können auch drei oder nur eines sein, wobei letzteres wegen der Asymmetrie und der damit verbundenen Klemmgefahr nicht bevorzugt wird. Die Sperrelemente müssen nicht rollfähig sein, soferne sie sich nur nicht bei ihrer Bewegung verklemmen können.

## Patentansprüche

1. Schlagvorrichtung zum Auslösen einer Zündung einer pyrotechnischen Vorrichtung, mit einem Gehäuse (13) und einem federbelasteten, in Ruhelage der Schlagvorrichtung gespannten Schlagbolzen (14), der in einer Ausnehmung des Gehäuses (13) verschieblich gelagert ist und zumindest in seinem der Schlagbolzenspitze (16) abgewandten Endbereich hohl ausgebildet ist, wobei ein Schieber (17), der an seiner äußeren Mantelfläche eine Umfangsnut (18) aufweist, verschieblich in diesem Hohlraum angeordnet ist und eine Schieberfeder (22) am Gehäuse (13) und am Schieber (17) angreift, wobei in der Wand des Schlagbolzens (14) zumindest eine Durchbrechung vorgesehen ist und in jeder dieser Durchbrechungen ein Sperrelement, beispielsweise eine Kugel (19) eingelegt ist und wobei zum Auslösen ein Auslösehebel (5) den Schieber (17) gegen die Kraft der Schieberfeder (22) verschiebt,
dadurch gekennzeichnet,
daß in Ruhelage der Schlagvorrichtung (4) die Durchbrechung der Umfangsnut (18) axial unmittelbar benachbart ist,
daß die Schieberfeder (22) die Umfangsnut (18) von der Durchbrechung weg drängt,
daß das Sperrelement (19) radial nach außen vorspringt und in eine Tasche (20) des Gehäuses (13) ragt,
daß die Schlagbolzenfeder (26) am Gehäuse (13) und am Schlagbolzen (14) angreift.

2. Schlagvorrichtung nach Anspruch 1, dadurch gekennzeichnet, daß das Gehäuse (13) mehrteilig ausgebildet ist und daß der Schlagbolzen (14) zumindest einen radialen Vorsprung (33) aufweist, der sich in einem Bereich (34) der Gehäuseinnenwand mit größerem Radius befindet und durch den die axiale Beweglichkeit des Schlagbolzens begrenzt wird.

3. Schlagvorrichtung nach einem der vorstehenden Ansprüche, dadurch gekennzeichnet, daß der Schlagbolzen von einer Schlagbolzenfeder (26), die an ihm und am Gehäuse (13) angreift, in Richtung der Schlagbolzenspitze (16) gedrängt wird.

4. Schlagvorrichtung nach einem der vorstehenden Ansprüche, dadurch gekennzeichnet, daß der Schieber (17) von einer Schieberfeder (22), die an ihm und am Gehäuse (13) angreift, in Richtung von der Schlagbolzenspitze (16) weg gedrängt wird.

5. Schlagvorrichtung nach einem der vorstehenden Ansprüche, dadurch gekennzeichnet, daß der Schieber (17) unter der Wirkung der Schieberfeder (22) an einem Teil (23) eines Hebels (5) anliegt, der beim Auslösen der Schlagvorrichtung gegen die Kraft der Schieberfeder (22) bewegt wird.

6. Schlagvorrichtung nach einem der vorstehenden Ansprüche, dadurch gekennzeichnet, daß ein Sperrstift (40) in die Bahn des Schlagbolzens (14) ragt, daß der Sperrstift unter der Wirkung einer Aktivatorfeder (42) steht, die bestrebt ist, ihn aus der Schlagbolzenbahn zu bewegen und daß der Sperrstift nach Aktivieren der Vorrichtung durch eine mechanische oder hydraulische Zeitverzögerungsvorrichtung über ein vorbestimmtes Zeitintervall in der Bahn des Schlagbolzens gehalten wird.

7. Schlagvorrichtung nach einem der vorstehenden Ansprüche, dadurch gekennzeichnet, daß die Zeitverzögerungsvorrichtung ein Teil (44) aus duktilem Material, das sich am Gehäuse (36) abstützt und unter der Wirkung der Aktivatorfeder plastisch deformiert wird, umfaßt.

8. Schlagvorrichtung nach Anspruch 7, dadurch gekennzeichnet, daß sich im desaktivierten Zustand ein mit dem Sperrstift (40) verbundener Teil, bevorzugt ein Federteller (41), an einer Kappe (11) des Gehäuses (36) abstützt, sodaß der duktile Teil (44) entlastet ist, und daß zum Aktivieren die Kappe (11) entfernt wird.

9. Schlagvorrichtung nach Anspruch 7 oder 8, dadurch gekennzeichnet, daß der duktile Teil (44) die Form einer Scheibe hat und sich entlang seines Umfanges an einem Absatz (43) des Gehäuses abstützt.

10. Schlagvorrichtung nach Anspruch 7 oder 8, dadurch gekennzeichnet, daß der duktile Teil (44) die Form eines Querbolzens hat, der in einer radialen Ausnehmung (45) des Federtellers (41) steckt, wobei die radiale Ausnehmung mit zunehmendem Abstand von der Achse (37) des Sperrstiftes (40) eine größere axiale Erstreckung in Deformationsrichtung des Querbolzens aufweist, um seine Deformation zu erlauben.

## Claims

1. A striking device for triggering ignition of a pyrotechnic device, comprising a housing (13) and a springloaded striking pin (14), which is loaded when the striking device is in the rest position, is mounted displaceably in a recess in the housing (13) and is of hollow construction at least in its end area remote from the striking pin tip (16), a slide (17), which comprises a circumferential groove (18) at its outer circumferential surface, being arranged displaceably in this hollow space and a slide spring (22) acting on the housing (13) and the slide (17), at least one opening being provided in the wall of the striking pin (14) and a blocking element, for example a ball (19), being inserted in each of these openings, and a trigger lever (5) displacing the slide (17) against the force of the slide spring (22) to effect triggering,
characterised in that
the opening is axially directly adjacent the circumferential groove (18) when the striking device (4) is in the rest position,
in that the slide spring (22) forces the circumferential groove (18) away from the opening,
in that the blocking element (22) projects radially outwards and into a pocket (20) in the housing (13),
in that the striking pin spring (26) acts on the housing (13) and the striking pin (14).

2. A striking device according to claim 1, characterised in that the housing (13) is of multi-part construction and in that the striking pin comprises at least one radial projection (33), which is located in an area (34) of larger radius of the housing inner wall and by which the axial mobility of the striking pin is defined.

3. A striking device according to either one of the preceding claims, characterised in that the striking pin is forced by a striking pin spring (26), which acts thereon and on the housing (13), in the direction of the striking pin tip (16).

4. A striking device according to any one of the preceding claims, characterised in that the slide (17) is forced by a slide spring (22), which acts thereon and on the housing (13), in -he direction away from the striking pin tip (16).

5. A striking device according to any one of the preceding claims, characterised in that, under the action of the slide spring (22), the slide (17) lies against a part (23) of a lever (5) which is moved against the force of the slide spring (22) when the striking device is triggered.

6. A striking device according to any one of the preceding claims, characterised in that a blocking pin (40) projects into the path of the striking pin (14), in that the blocking pin is acted on by an activator spring (42), the intended purpose of which is to move said blocking pin out of the striking pin path and in that the blocking pin is held in the path of the striking pin for a predetermined period of time after activation of the device by a mechanical or hydraulic time delay device.

7. A striking device according to any one of the preceding claims, characterised in that the time delay device comprises a component (44) of ductile material, which is supported on the housing (36) and is plastically deformed by the action of the activator spring.

8. A striking device according to claim 7, characterised in that, in the de-activated state, a component connected to the blocking pin (40), preferably a spring plate (41), is supported on a cap (11) of the housing (36), such that the ductile component (44) is relieved, and in that the cap (11) is removed for activation.

9. A striking device according to claim 7 or claim 8, characterised in that the ductile component (44) is in the form of a disk and is supported around its circumference on a stepped portion (43) of the housing.

10. A striking device according to claim 7 or claim 8, characterised in that the ductile component (44) is in the form of a transverse pin, which projects into a radial recess (45) in the spring plate (41), the radial recess extending axially further in the deformation direction of the transverse pin as the distance from the axis (37) of the blocking pin (40) increases, in order to permit deformation of said transverse pin.

## Revendications

1. Dispositif de percussion pour déclencher un amorçage d'un dispositif pyrotechnique, comportant un boîtier (13) et un percuteur (14) qui est chargé par un ressort et est contraint lorsque le dispositif de percussion est dans la position de repos et qui est monté de manière à être translatable dans un évidement du boîtier (13) et est agencé avec une forme évidée au moins dans sa partie d'extrémité tournée à l'opposé de la pointe (16) du percuteur, et dans lequel un poussoir (17), qui possède une gorge circonférentielle (18) sur sa surface enveloppe extérieure, est monté de manière à être translatable dans cette cavité et un ressort (22) du poussoir est en appui sur le boîtier (13) et sur le poussoir (17), et dans lequel au moins un perçage est prévu dans la paroi du percuteur (14) et un élément de blocage, par exemple une bille (19), est inséré dans chacun de ces perçages, et pour le déclenchement, un levier de déclenchement (5) déplace le poussoir (17) à l'encontre de la force du ressort de poussoir (22),
caractérisé en ce
que lorsque le dispositif de percussion (4) est dans la position de repos, le perçage est directement voisin, axialement, de la gorge circonférentielle (18),
que le ressort (22) du poussoir écarte la gorge circonférentielle (18), du perçage,
que l'élément de blocage (19) fait saillie radialement vers l'extérieur et s'engage dans un logement (20) du boîtier (13), et
que le ressort (26) du percuteur prend appui sur le boîtier (13) et sur le percuteur (14).

2. Dispositif de percussion selon la revendication 1, caractérisé en ce que le boîtier (13) est formé de plusieurs éléments et que le percuteur (14) comporte au moins un appendice saillant radial (33), qui est situé dans une zone (34) de la paroi intérieure du boîtier, possédant un rayon plus grand et est limité par la mobilité axiale du percuteur.

3. Dispositif de percussion selon l'une des revendications précédentes, caractérisé en ce que le percuteur est repoussé par un ressort (26), qui prend appui sur le percuteur et sur le boîtier (13), en direction de la pointe (16) du percuteur.

4. Dispositif de percussion selon l'une des revendications précédentes, caractérisé en ce que le poussoir (17) est écarté par un ressort (22) du poussoir, qui prend appui sur le poussoir et sur le boîtier (13), en direction de la pointe (16) du percuteur.

5. Dispositif de percussion selon l'une des revendications précédentes, caractérisé en ce que le poussoir (17) est soumis à l'action de son ressort (22) contre une partie (23) d'un levier (5), qui, lors du déclenchement du dispositif de percussion, est déplacé à l'encontre de la force du ressort (22) du poussoir.

6. Dispositif de percussion selon l'une des revendications précédentes, caractérisé en ce qu'une tige de blocage (40) pénètre dans le trajet du percuteur (14), que la tige de blocage est soumise à l'action d'un ressort d'activation (42), qui tend à écarter la tige de blocage, du trajet du percuteur et qu'après l'activation du dispositif, la tige de blocage est retenue par un dispositif de temporisation mécanique ou hydraulique, pendant un intervalle de temps prédéterminé, dans la trajectoire du percuteur.

7. Dispositif de percussion selon l'une des revendications précédentes, caractérisé en ce que le dispositif de temporisation comprend une partie (44) formée d'un matériau ductile, qui prend appui sur le boîtier (36) et est déformée plastiquement sous l'action du ressort d'activation.

8. Dispositif de percussion selon la revendication 7, caractérisé en ce que dans l'état désactivé, une partie reliée à la tige de blocage (40), de préférence une coupelle de ressort (41), prend appui sur un capuchon (11) du boîtier (36) de sorte qu'on obtient une détente de contrainte de la partie ductile (44) et que pour l'activation, on retire le capuchon (11).

9. Dispositif de percussion selon la revendication 7 ou 8, caractérisé en ce que la partie ductile (44) possède la forme d'un disque et prend appui, le long de sa périphérie, contre un épaulement (43) du boîtier.

10. Dispositif de percussion selon la revendication 7 ou 8, caractérisé en ce que la partie ductile (44) possède la forme d'un goujon transversal, qui est enfiché dans un évidement radial (45) de la coupelle de ressort (41), l'étendue axiale de l'évidement radial augmentant, dans la zone de déformation du goujon transversal, lorsqu'on s'écarte de plus en plus de l'axe (37) de la tige de blocage (40), de manière à permettre la déformation de la tige de blocage.
